# EUROPEAN PATENT SPECIFICATION

(11) **EP 3 409 155 B1**
(45) Date of publication and mention of the grant of the patent: **18.03.2020**
(21) Application number: 18173171.2
(22) Date of filing: 18.05.2018
(51) Int. Cl.: A47J 42/40, A47J 31/42, A47J 31/06

(54) **DOSING DEVICE FOR A FILTER HOLDER OF AN ESPRESSO COFFEE MACHINE AND DOSING METHOD IMPLEMENTED WITH SUCH A DEVICE**
DOSIERVORRICHTUNG FÜR FILTERHALTER EINER ESPRESSO-KAFFEEMASCHINE UND DURCH SOLCHEN VORRICHTUNG IMPLEMENTIERTES DOSIERVERFAHREN
DISPOSITIF DE DOSAGE POUR PORTE-FILTRE DE MACHINE À CAFÉ EXPRESSO ET PROCÉDÉ DE DOSAGE MIS EN OEUVRE AVEC UN TEL DISPOSITIF

(30) Priority: 31.05.2017 IT 201700059702
(43) Date of publication of application: 05.12.2018
(73) Proprietor: Gruppo Cimbali S.p.A., 20082 Binasco (MI) (IT)
(72) Inventor: Abbiati, Giacomo, 20082 Binasco MI (IT)
(74) Representative: Perani & Partners S.p.A.

(56) References cited:
- EP-A1- 3 023 041
- WO-A1-2012/138327
- AU-B2- 2012 268 779
- ES-U- 1 068 358

## Description

The present invention relates to a dosing device for dispensing a predetermined dose of ground coffee into the filter holder of an espresso coffee machine, said dose being that relating to the formation of a certain beverage, comprising a grinder of roasted coffee granules positioned on a support base, a discharge conduit of ground coffee coming from said grinder, a discharge opening at the end of said conduit, a station, in said support base, for positioning the filter holder into which the dose of ground coffee is dispensed.

The invention also relates to the method for dispensing predetermined doses of ground coffee into the filter holder of an espresso coffee machine performed through the device.

In accordance with the prior art, the dispensing of a predetermined dose of ground coffee into the filter holder of an espresso coffee machine is performed through dosing devices that comprise a cylindrical container, associated with a grinder of coffee granules into which, through a slide, the ground coffee coming from inside the grinder flows. An example of the prior art is disclosed in ES 1 068358 U.

The upper end of the cylindrical container of the dosing device can be closed through a lid while the lower end is closed by a flat wall provided with a first opening, above the filter holder station, known as a loading mouth, and a second central opening through which a member is inserted, inside the cylindrical container, with walls arranged in a star shape around the central vertical axis passing through the opening, to which angular displacements of a predetermined amplitude are imparted, through a lever that can be manually activated from outside the cylindrical container.

Every displacement of the lever corresponds to a certain volume of coffee powder which, being located between two walls of the star member, is conveyed towards the opening above the filter holder station from which it comes out by gravity ending up in the filter holder.

However, the operating methods of the dosing device indicated above have various drawbacks including the fact that the doses that can be dispensed with such device must necessarily be an entire multiple of the basic dose obtained with a movement of the star member that determines the volume of ground coffee conveyed towards the discharge mouth.

It follows that, if the volume that can be displaced with only a single angular movement of the star member corresponds to about 7 grams which is the necessary dose for dispensing an espresso coffee, if the request were that of a beverage known as "café crème" whose dose of ground coffee is 9 grams, such dose, not being a multiple of 7, could not be correctly dispensed to the filter holder.

On the other hand, it appears inconceivable to be able to realise the star-shaped volumetric meter, in practice the space between two adjacent walls of the star member, so that it can contain a minimum dose equal to only one gram of coffee, since, as well as construction difficulties, this would also and however imply an excessive number of displacement operations of the lever that activates the star member for forming the necessary dose for the preparation of the required beverage.

A further drawback of the dosing devices of the type indicated, is that deriving from the quantity, about 300 - 500 grams, of ground coffee contained in the receptacle in which the star-shaped volumetric member operates. Since the precision of such member also depends on the weight of the column of coffee located in the angular sectors which, necessarily, varies as the quantity of ground coffee decreases, it therefore requires continuous replenishment, perhaps automatically so as to preserve the degree of precision.

Added to the drawbacks mentioned above is the fact that the ground coffee that remains waiting to be dispensed quickly loses its organoleptic characteristics.

In accordance with a different operating type for constituting the necessary dose for the formation of a predetermined coffee-based beverage, the prior art also includes grinding and dosing devices in which the required dose is ground and directly dispensed into the filter holder calculating the quantity through the operating time of the grinders or by determining the weight through, for example, electronic weighing devices.

Although preserving the organoleptic characteristics of the coffee, the "on demand" dosing technique still implies the drawback of requiring a relatively long time for completing the grinding and therefore the dispensing of the dose.

The waiting time is a clearly negative factor for businesses in which there is a steady flow of clientele.

The object of the present invention is that of providing a dosing device, associated with a coffee bean grinder, which has the structural and functional characteristics to allow it to overcome the drawbacks encountered in dosing systems of the prior art.

These and other objects that will be more evident from the following description are reached by a ground coffee dosing device which is characterised in accordance with claim 1 below.

The invention will now be described in more detail with reference to a practical embodiment thereof provided solely by way of non-limiting example, illustrated in the appended claims in which:
- Figure 1 shows a vertical schematic section of a coffee bean grinder with which the dosing device according to the present invention is associated;
- Figure 2 shows a perspective schematic view of the carousel body of the dosing device according to the invention;
- Figure 3 shows a perspective schematic view of the vertical section of the dosing device performed according to the line III-III of Figure 2;
- Figure 4 shows a perspective schematic view of the dosing device of Figure 2 with some front structural elements removed;
- Figure 5 shows a perspective view of the lobed plate-like element of the carousel structure of the dosing device according to the invention;
- Figure 6 shows a perspective view of the plate-like element with circular openings of the carousel structure of the dosing device according to the invention;

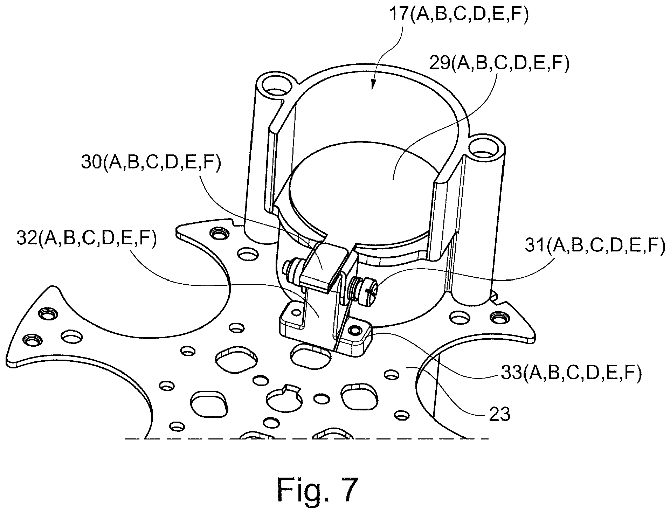

- Figure 7 shows a perspective schematic view, taken from below, of the bottom of one of the compartments constituting the dosing device, equipped with an opening and closing plate;
- Figure 8 shows a perspective schematic view of the cylindrical tubular element constituting a compartment of the carousel body forming the dosing device;
- Figure 9 shows a perspective schematic view of one of the curved closing elements of the edge of the carousel body of the dosing device.

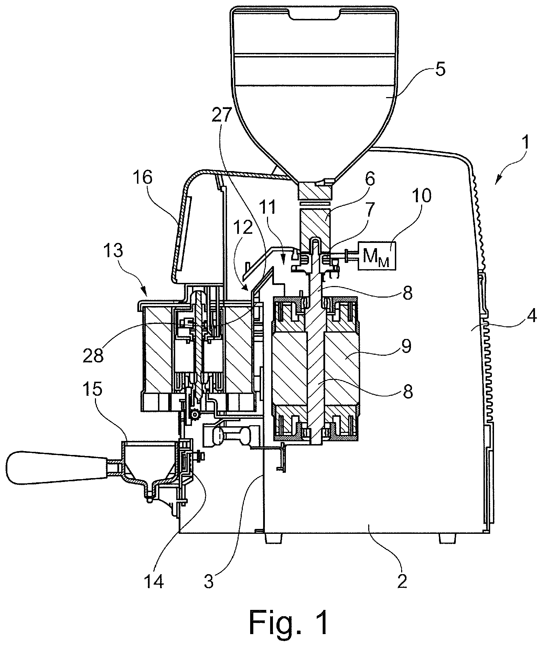

With reference to the aforementioned figures and in particular to Figure 1, the number 1 has been used, overall, to indicate a coffee bean grinding device comprising a base 2 from which a wall 3 and a column body 4 branch off.

On the top of the column 4, a hopper 5 is conventionally placed for containing the coffee beans for grinding which, descending by gravity into the underlying channel 6, meet a conventional pair 7 of grinders, of which at least one is rotary, being connected to the shaft 8 of an electric motor 9.

The distance between the grinders of the pair of grinders 7 is adjustable, through an electric motor 10, conventionally so as to vary the grinding particle size under the management of a conventional electronic control unit (ECU) not shown.

The ground coffee is sent by the centrifugal force exerted by the rotary grinder of the pair of grinders 7, towards a discharge conduit 11, shown schematically in figure 1, whose opening 12 faces towards the body of the dosing device, according to the invention, indicated overall with number 13.

Such body 13 is positioned alongside the vertical wall 3 of the base 2 to which it is connected directly or with the interposition of a weighing member as will be specified more clearly in the following description.

The conventional station 14 for the filter holder 15, below the dosing device 13, is also connected to the base 2.

In a position above the dosing device 13, the column 4 of the grinder, comprises an electronic interface, indicated with number 16 which, as well as the operating controls for the operation of the dosing device, also includes the conventional electronic control unit (ECU) already mentioned for setting the various operating parameters, not only of the dosing device 13, but also those of the grinder 1.

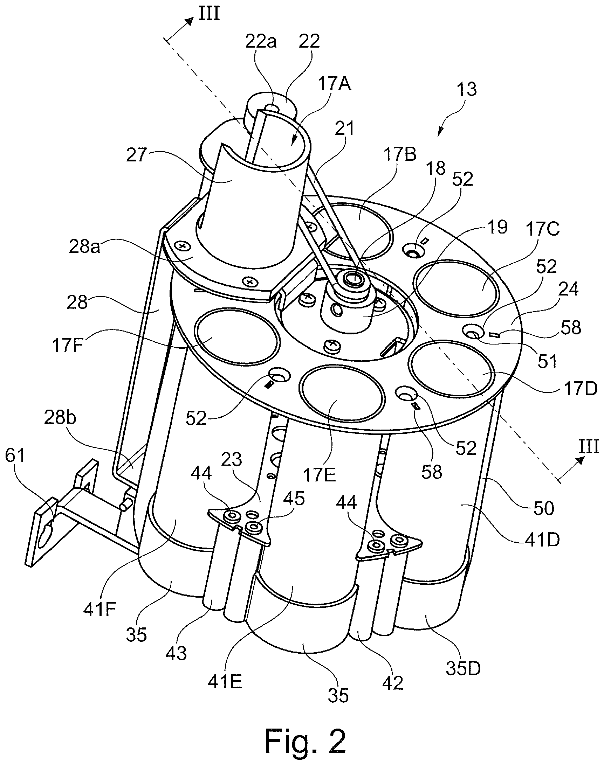

With reference to figures 2, 3, 4, 5 and 6, it is noted that the dosing device 13 comprises a plurality of compartments, six in the illustrated example, indicated with 17A, 17B, 17C, 17D, 17E, 17 F, arranged in a circle around a central rotation shaft 18 with the formation of a body whose overall structure can be defined as being of the carousel type.

The central shaft 18, in its upper end 19, is provided with a pulley 20 in which a transmission belt 21 is engaged, connected to the pulley 22 fitted onto the shaft of a conventional electric motor 22a whose control, as will be seen below, is performed by the electronic control unit (ECU) included in the interface 16.

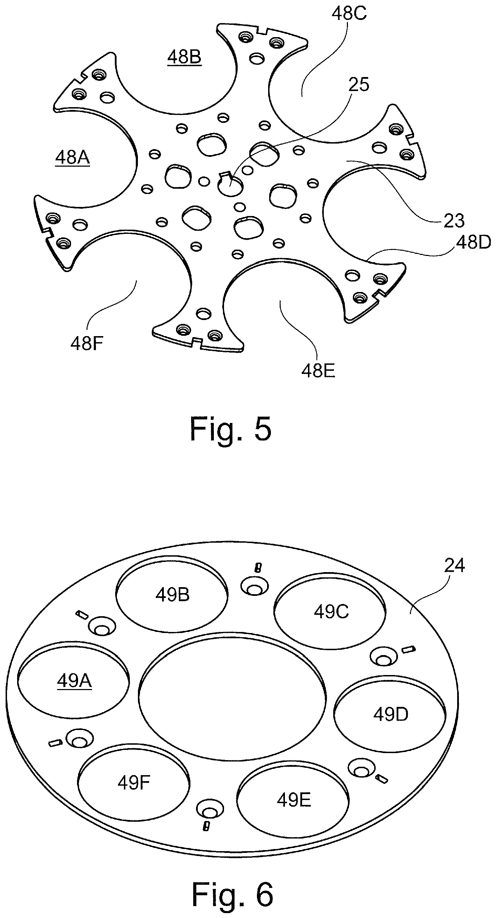

The compartments 17 (A, B, C, D, E, F) are formed by respective cylindrical tubular elements that will be described in detail below and that are held in position, around the central shaft 18, be a first plate 23, with lobes, shown in figure 5, and by a plate 24, above them, with circular holes, shown in figure 6. The latter plate is positioned at the upper ends of the compartments 17 (A, B, C, D, E, F) where the latter display their relative openings 25 (a, b, c, d, e, f).

The lobed plate 23 is fitted onto the shaft 18 through the 26 and locked thereon with a conventional key, not shown, that is engaged in such hole.

More details on the mechanical connection methods of the tubular elements that constitute the compartments 17 (A, B, C, D, E, F) to the plates 23 and 24 will emerge from the following description.

With reference to figures 1, 2, 3 and 4, it is noted that the opening 12 of the discharge channel 11 of the ground product faces a vertical tile 27 which, through a plate, 28a is connected to a bracket.

The latter, through a support 18a, sustains the shaft 18 in the vertical position and connects the carousel body 13 to the wall 3 of the base 2.

All this takes place in the embodiment that does not envisage the use of a weighing device for the formation of the doses.

A vertical tile 27 defines, as will be described in more detail below, the loading station of the product ground inside the compartment 17(A, B, C, D, F) of the dosing device which, during operation, is located in the position below the tile 27 and opposite the opening 12 of the channel coming from the grinder.

Each compartment 17 (A, B, C, D, E, F) is provided, at the lower end, opposing the respective upper openings 17 (a, b, c, d, e, f), with an opening and closing bottom comprising a respective plate 29 (A, B, C, D, E, F), having a circular section like that of the compartments 17.

Each plate 29 (A, B, C, D, E, F) is provided with a radial appendage 30 (A, B, C, D, E, F) and is mounted oscillating around a respective pin 31 (A, B, C, D, E, F) the latter being housed in a respective support 32 (A, B, C, D, E, F) fixed to the lobed plate 23, through a conventional base plate and related screw members.

An elastic member, for example a torsion spring 33 (A, B, C, D, E, F) mounted coaxially on the pin of the plate, determines the positioning thereof against the lower edge 34 (A, B, C, D, E, F), of the respective compartment.

A tubular stretch 35 (A, B, C, D, E, F), open on the bottom, is provided as an axial extension of each compartment below the closing and opening plate, towards the station 14 of the filter holder 15.

In the position below the lobed plate 23 and supported thereby, the dosing device comprises a mechanism for activating the plates 29 (A B C D E F) when one of them is located in the position below the station 14 of the filter holder 15.

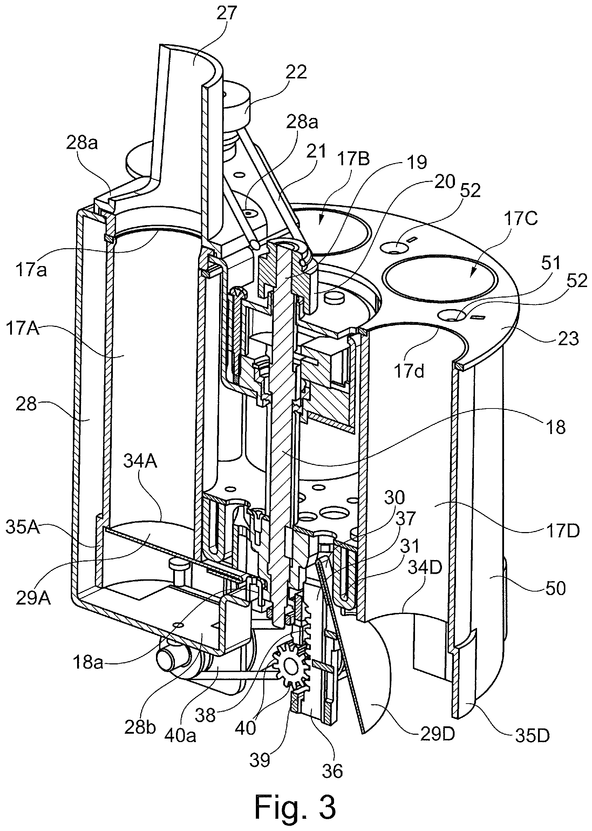

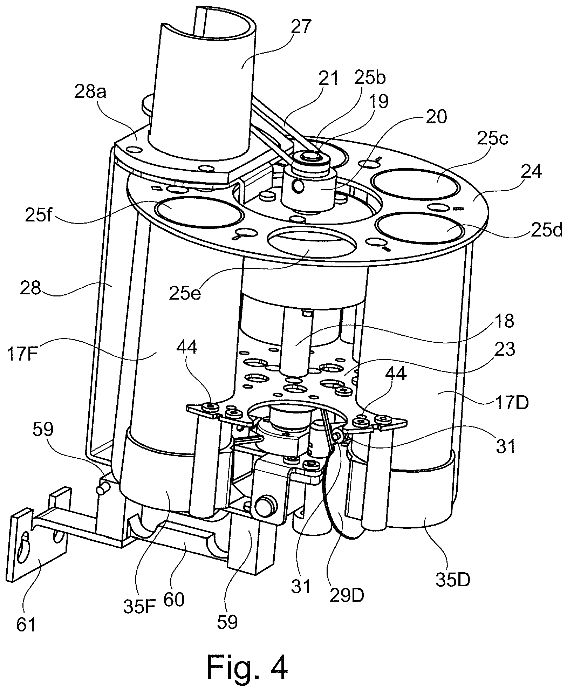

The aforementioned mechanism, as can be noted in particular in figures 3 and 4, comprises a pusher 36 whose free end 37 is susceptible to being engaged against the radial appendage 30 of each plate 29 when the related compartment is in the position above the filter holder 15.

The pusher 36 is associated with a rack 38 which, being engaged with a toothed wheel 39, determines the vertical rectilinear translation, parallel to the shaft 18, of the pusher 36.

The latter, with its end 37, causes the lifting of the radial appendage 30 (A, B, C, D, E, F) of the plate 29 (A, B, C, D, E, F) and, therefore, the opening of the bottom of the compartment 17 (A, B, C, D, E, F) which is in the aforementioned position.

The angular displacement of the plate 29 (A, B, C, D, E, F) takes place in contrast to the spring 33 present on the pin 31 whose elastic action is directed towards keeping the plate 29 (A, B, C, D, E, F) in the closed position against the edge of the relative compartment.

The toothed wheel 39 is placed in rotation, through a belt 40, an electric motor 40a also commanded and controlled by the electronic control unit (ECU) of the dosing device.

The electric motor 40a and the assembly of mechanisms that activate the pusher 36, are supported by the horizontal wall 28b of the bracket 28.

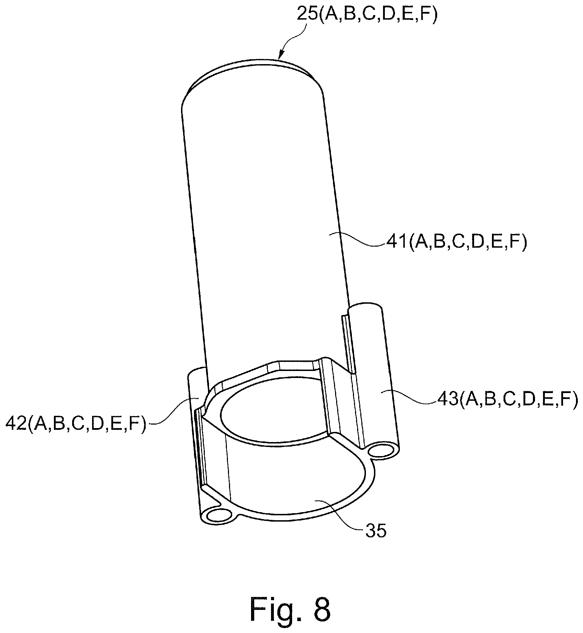

With reference to Figure 8, it is noted that each of the compartments 17 (A, B, C, D, E, F) is comprised of a respective cylindrical tubular body 41 (A, B, C, D, E, F) provided with a larger internal volume than the volume corresponding to that of the maximum predetermined dose envisaged to be contained in each compartment or however at least equal to the latter.

Outside the cylindrical tubular body 41 (A, B, C, D, E, F) diametrically opposing housings 42 and 43 are fixed, for housing respective set screws 44 and 45. The latter are engaged in respective holes 46 and 47 provided in the lobed plate 23, when the tubular body 41 (A, B, C, D, E, F) is positioned in the respective cavity 48 (A, B, C, D, E, F) determining the stable axial and radial anchoring thereof.

In relation to the circular plate 24, each tubular element 41 (A, B, C, D, E, F) is housed in the respective circular hole 49 (A, B, C, D, E, F) which determines the radial containment thereof at substantially the same level as the openings 25 (a, b, c, de, f).

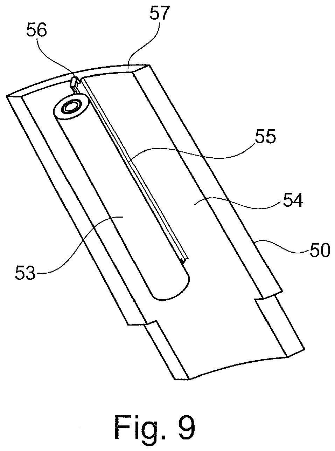

The carousel structure of the dosing device 13, formed by the cylindrical tubular bodies 41 (A, B, C, D, E, F) with the relative compartments 17 (A, B, C, D, E, F), is completed peripherally by the placement, between two adjacent tubular bodies 41, of an arched plate-like element 50, shown in a perspective view in figure 9, with a view of its internal part.

The arched plate-like elements 50 are fixed to the circular plate 24 through a respective screw 51, passing through the holes 52 obtained in the plate itself, which is engaged within a seat 53 provided on the internal wall 54 of the element 50.

A rib 55, also provided on the internal wall 54 of the element 50, with its end 56 projecting from the upper edge 57 of the element 50, determines a stable positioning of the element itself, relative to the plate 24, being inserted in the relative slot 58 of the plate.

The dosing method actuated with the dosing device previously described, envisages filling the compartments 17 (A, B, C, D, E, F) with a respective dose of ground coffee bringing the compartments of the dosing device in succession, below the electronic control unit (ECU), at the tile 27 which, facing the opening 12 of the grinder, defines the loading station of the doses into the respective compartments.

The determination of the dose of ground coffee, according to the beverage to be prepared, in accordance with one embodiment of the dosing device, is performed based on the grinding time of the coffee beans used to form the dose.

In accordance with a different embodiment, the determination of the dose in each compartment of the dosing device is performed by weighing the volume of ground coffee that reaches the compartment.

For that purpose, in the alternative mentioned above, as schematically shown in figures 2 and 4, the carousel body, comprising the compartments 17(A B C D E F), the plates 23, 24 and the structural elements that it comprises, is connected to one end 59 of a conventional weighing device 60 whose other end 61 allows the suspension from the vertical wall 3 of the base 2 of the grinding device.

With the dosing device previously described, it is clear that, in accordance with one aspect of the invention, a method is actuated for dispensing a predetermined dose of ground coffee into the filter holder of an espresso coffee machine, said dose being that relative to the formation of a certain beverage, comprising the steps of:
- providing a plurality of doses of ground coffee, different from each other, adapted for the preparation of respective different types of beverage, within the respective containment compartments, these being mutually displaceable between a loading position of the relative dose of ground coffee, and an unloading position of said dose into an underlying filter holder;
- selecting the dose relating to the type of beverage required;
- selecting the relevant compartment that contains it;
- moving the compartment containing the selected dose from the position held at the time of its selection to that corresponding to the station of the filter holder;
- dispensing the selected dose into the filter holder by unloading it from the compartment that contains it.

It is clear that the plurality of compartments containing a respective dose, in an alternative embodiment of the invention, may also be comprised of only two compartments, one with the precise dose for a traditional espresso coffee, and the other with a precise dose for the formation, for example, of a double espresso coffee or for the formation of a "café crème".

Alternatively, maintaining the carousel structure of the dosing device comprising six compartments 17, as described above, it is also possible, through programming performed with the electronic control unit (ECU) included in the interface 16, to enable the movement of the carousel body so that only the two compartments 17 of the carousel body are used in the dosing operations.

Also alternatively, it is possible to completely disable the functionality of the compartments 17 with the result that the dosing device can also operate on each compartment like an "on demand" grinding-dosing device.

Finally, it is also possible to enable only one compartment 17 making the device particularly suitable in businesses with a slow flow of clientele.

With the dosing device in accordance with the invention it is therefore possible to dispense the type of beverage required very soon after the customer's request, as the waiting time necessary for the grinding and formation of the dose is eliminated, as this is already provided within a respective compartment of the dosing device.

Naturally not all the compartments of the carousel body have to be necessarily equipped with a respective dose of ground coffee and be ready for dispensing the beverage.

By using the programming enabled by the electronic control unit with which the device is provided, it is clear that the preparation of the doses in the individual compartments of the carousel body can take place at different times, as a function of the envisaged flow of clientele, based on particular times as well as making the "on demand" dispensing of doses possible in any case.

For this purpose, it is sufficient to keep one of the compartments empty and available for use, through the ECU, at the loading position, make the grinder dispense the required dose into the compartment, calculating the grinding time or setting the weight if the device is provided with a weighing device, transfer the compartment, through the ECU itself, into the filter holder filling station and finally dispense the required beverage bringing the filter holder with the required dose into the espresso coffee machine.

Other methods of use of the dosing device according to the invention are clearly possible according to the user's needs, without any indication and description thereof being necessary, without departing from the scope of the invention as claimed below.

## Claims

1. Dosing device for dispensing predetermined doses of ground coffee into a filter holder of an espresso coffee machine, comprising a grinder (1) of roasted coffee granules positioned on a support base (2), a discharge conduit (11) of ground coffee coming from said grinder, a discharge opening (12) at the end of said conduit, a station (14), in said support base, for positioning the filter holder (15) in which the dose of ground coffee is fed, a body (13) provided with of a plurality of compartments (17, A, B, C, D, E, F), wherein the volume of each compartment is at least equal to a respective predetermined dose of ground coffee, each compartment (17) being provided with a top with a relative opening (25, a, b, c, d, e, f) and a bottom, the latter being provided with members (29, 30, 31, 33) for determining the opening and closing thereof, **characterized in that** said body (13) is displaceable between a first position (27) in which the open top (25) of one of the compartments (17) is positioned at said opening (12) of the discharge conduit (11) of ground coffee and a second position (14) in which the bottom of one of the compartments (17) is positioned above said station (14) of the filter holder (15), there being provided motor means (20, 21, 22) to carry out the displacements of said body (13) provided with compartments (17), motor means (36 38, 39) for actuating said members (29, 30, 31, 33) for opening and closing the bottom of the compartment when the compartment is in the position above the station (14) of the filter holder.

2. Device according to claim 1, **characterized in that** said plurality of compartments (17 A B C D E F) are next to each other in a circular carousel configuration (13), angularly displaceable, in both directions, around a central rotation axis (18) around which said compartments are arranged.

3. Device according to claims 1 and 2, **characterized in that** the compartments (17, A, B, C, D, E, F) of said carousel body (13) are all provided with equal volume at least equal to that of the predetermined maximum dose to be contained in each compartment.

4. Device according to any one of claims 1 to 3, **characterized in that** the section of each compartment (17, A, B, C, D, E, F) of said carousel body (13), transversal to the longitudinal axis extending between the top and the bottom, is circular.

5. Device according to any one of claims 1 to 4, **characterized in that** said compartments are in the shape of cylindrical containers (41, A, B, C, D, E, F) arranged parallel to the central rotation axis of said body, supported between two plate-like elements (23, 24) axially spaced apart and attached to a rotation shaft (18), the ends of said shaft being mounted on respective supports, one end of said shaft being connected to said motor means (20, 21, 22) provided to carry out the angular displacements of the body (13).

6. Device according to any one of claims 1 to 5, **characterized in that** said members for determining the opening and closing of the bottom of the compartment, when this is located in a position above the position of the filter holder, comprise a circular plate (29, A B C D E F) provided with a pin (31 A B C D E F), through which it can move angularly between a position in which it lies against the edge of the compartment bottom, keeping it closed, and a position in which it is spaced from said edge, with consequent opening of the bottom of the compartment, said pin (31) being rotatably mounted on a support (32) carried by one (23) of the plate-like elements (23, 24) for supporting the cylindrical containers (41) forming the compartments (17), said plate being provided with an appendage (30) which extends radially out from its contour, said appendage (30) being adapted to interfere with a pusher (36) which, in contrast with elastic means (33) which maintain said plate (29) in the closed position against the edge of the compartment bottom (17), by pressing on said appendage (30), determines the angular displacement of the plate (29) about said pin (31), moving it away from the edge of the bottom of the compartment (17).

7. Device according to any one of claims 1 to 6, **characterized in that** said pusher (36) is actuated by said motor means (36, 38, 39) for activating said opening and closing members of the bottom of the compartment (17) when the compartment (17) is located in a position above the station (14) of the filter holder.

8. Method for dispensing a predetermined dose of ground coffee in the filter holder (15) of an espresso coffee machine, said dose being that relating to the formation of a certain beverage, comprising the steps of:
- providing a plurality of doses of ground coffee, different from each other, adapted for the preparation of respective different types of beverage, within the respective containment compartments (17, A, B, C, D, E, F), these being mutually displaceable between a loading position (27) of the relative dose of ground coffee, and an unloading position (14) of said dose into an underlying filter holder;
- selecting the dose relating to the type of beverage required;
- selecting the relevant compartment that contains it;
- moving the compartment containing the selected dose from the position held at the time of its selection, moving it to the station (14) of the filter holder;
- dispensing the selected dose into the filter holder by unloading it from the compartment that contains it.

9. Method according to claim 8, **characterized in that** said step of providing a plurality of doses of ground coffee within the respective containment compartments is programmable, via said electronic control unit (ECU), both in relation to the type of doses to be prepared, and in relation to the number of compartments (17) within which the doses are arranged.

10. Method according to claim 9, wherein said programming of the step of arranging the type of doses and/or the number of compartments in which the doses are arranged, varies during a time span.

11. Method according to claim 10, wherein said programming change time span is weekly.

12. Method according to claim 10, wherein said programming change time span is daily.

## Patentansprüche

1. Dosiervorrichtung zur Ausgabe von vorgegebenen, dosierten Mengen von gemahlenem Kaffee in einen Filterhalter einer Espressokaffeemaschine, umfassend ein auf einer Auflagebasis (2) positioniertes Mahlwerk (1) für geröstete Kaffeebohnen, eine Leitung (11) zur Ausgabe des gemahlenen Kaffees aus dem Mahlwerk, eine Ausgabeöffnung (12) am Ende der Leitung, eine Station (14) in der Auflagebasis zum Positionieren des Filterhalters (15), dem die dosierte Menge von gemahlenen Kaffee zugeführt wird, einen mit einer Mehrzahl von Kammern (17, A, B, C, D, E, F) versehenen Körper (13), wobei der Rauminhalt einer jeden Kammer wenigstens gleich einer jeweiligen dosierten Menge von gemahlenem Kaffee ist, wobei jede Kammer (17) mit einer Oberseite mit einer entsprechenden Öffnung (25, a, b, c, d, e, f) und einer Unterseite versehen ist, wobei Letztere mit Elementen (29, 30, 31, 33) versehen ist, die ihre Öffnung und Schließung bewirken, **dadurch gekennzeichnet, dass** der Körper (13) zwischen einer ersten Position (27), in der die offene Oberseite (25) einer der Kammern (17) an der Öffnung (12) der Ausgabeleitung (11) von gemahlenem Kaffee positioniert ist, und einer zweiten Position (14) verschiebbar ist, in der die Unterseite einer der Kammern (17) über der Station (14) des Filterhalters (15) positioniert ist, wobei Motormittel (20, 21, 22) zum Ausführen der Verschiebungen des mit Kammern (17) versehenen Körpers (13) und Motormittel (36 38, 39) zur Betätigung der Elemente (29, 30, 31, 33) zum Öffnen und Schließen der Unterseite der Kammer vorgesehen sind, wenn die Kammer sich in der Position über der Station (14) des Filterhalters befindet.

2. Vorrichtung nach Anspruch 1, **dadurch gekennzeichnet, dass** die Mehrzahl von Kammern (17 A B C D E F) nebeneinander auf einer kreisförmigen Karussellanordnung (13) angeordnet sind, die in beiden Richtungen um eine zentrale Drehachse (18) winkelverschiebbar ist, um welche die Kammern angeordnet sind.

3. Vorrichtung nach Anspruch 1 und 2, **dadurch gekennzeichnet, dass** die Kammern (17, A, B, C, D, E, F) des Karussellkörpers (13) allesamt den gleichen Rauminhalt aufweisen, der wenigstens gleich dem der vorgegebenen maximalen Dosiermenge ist, die in jeder Kammer enthalten sein soll.

4. Vorrichtung nach einem der Ansprüche 1 bis 3, **dadurch gekennzeichnet, dass** der Abschnitt einer jeden Kammer (17, A, B, C, D, E, F) des Karussellkörpers (13), der quer zu der sich zwischen der Oberseite und der Unterseite erstreckenden Längsachse liegt, kreisförmig ist.

5. Vorrichtung nach einem der Ansprüche 1 bis 4, **dadurch gekennzeichnet, dass** die Kammern die Form von zylindrischen Behältern (41, A, B, C, D, E, F) aufweisen, die parallel zu der zentralen Drehachse des Körpers angeordnet, zwischen zwei plattenartigen Elementen (23, 24), axial voneinander beabstandet angeordnet und an einer Drehwelle (18) befestigt sind, wobei die Enden der Welle auf jeweiligen Auflagen montiert sind, wobei ein Ende der Welle mit den Motormitteln (20, 21, 22) verbunden ist, die vorgesehen sind, um die Winkelverschiebungen des Körpers (13) auszuführen.

6. Vorrichtung nach einem der Ansprüche 1 bis 5, **dadurch gekennzeichnet, dass** die Elemente zum Öffnen und Schließen der Unterseite der Kammer, wenn diese in einer Position über der Position des Filterhalters angeordnet ist, eine kreisförmige Platte (29, A B C D E F) umfassen, die mit einem Stift (31 A B C D E F) versehen ist, durch den sie winkelmäßig zwischen einer Position, in der sie an der Kante der Kammerunterseite anliegt und geschlossen gehalten wird, und einer Position bewegt werden kann, in der sie von der Kante beabstandet ist, mit daraus folgender Öffnung der Unterseite der Kammer, wobei der Stift (31) drehbar auf einer Auflage (32) montiert ist, die von einem (23) der plattenartigen Elemente (23, 24) getragen wird, um die zylindrischen Behälter (41) zu stützen, die die Kammern (17) bilden, wobei die Platte mit einem Fortsatz (30) versehen ist, der sich radial aus ihrer Kontur erstreckt, wobei der Fortsatz (30) dazu geeignet ist, in einen Schieber (36) einzugreifen, der gegen elastische Mittel (33), die die Platte (29) in der geschlossenen Position gegen die Kante der Kammerunterseite (17) gedrückt halten, durch Drücken auf den Fortsatz (30) die Winkelverschiebung der Platte (29) um den Stift (31) bewirkt, indem er ihn weg von der Kante der Unterseite der Kammer (17) bewegt.

7. Vorrichtung nach einem der Ansprüche 1 bis 6, **dadurch gekennzeichnet, dass** der Schieber (36) von den Motormitteln (36, 38, 39) betätigt wird, um die Öffnungs- und Schließelemente der Unterseite der Kammer (17) zu aktivieren, wenn die Kammer (17) in einer Position über der Station (14) des Filterhalters angeordnet ist.

8. Verfahren zur Ausgabe einer vorgegebenen, dosierten Menge von gemahlenem Kaffee in den Filterhalter (15) einer Espressokaffeemaschine, wobei die dosierte Menge die ist, die sich auf die Herstellung eines bestimmten Getränks bezieht, umfassend die Schritte:
- Bereitstellen einer Mehrzahl von voneinander verschiedenen, dosierten Mengen von gemahlenem Kaffee, die jeweils zur Herstellung von verschiedenen Arten von Getränken geeignet sind, innerhalb der jeweiligen Aufnahmekammern (17, A, B, C, D, E, F), wobei diese zwischen einer Befüllungsposition (27) der jeweiligen dosierten Menge von gemahlenem Kaffee und einer Entleerungsposition (14) der dosierten Menge in einen darunter liegenden Filterhalter zueinander bewegbar sind;
- Auswählen der dosierten Menge entsprechend der Art des gewünschten Getränks;
- Auswählen der entsprechenden Kammer, die sie enthält;
- Bewegen der Kammer, die die ausgewählte dosierte Menge enthält, aus der zum Zeitpunkt ihrer Auswahl eingenommenen Position, Bewegen derselben zu der Station (14) des Filterhalters;
- Ausgeben der ausgewählten dosierten Menge in den Filterhalter durch Entleeren derselben aus der Kammer, die sie enthält.

9. Verfahren nach Anspruch 8, **dadurch gekennzeichnet, dass** der Schritt des Bereitstellens einer Mehrzahl von dosierten Mengen von gemahlenem Kaffee innerhalb der jeweiligen Aufnahmekammern mittels einer elektronischen Steuereinheit (ECU) sowohl bezüglich der Art der zuzubereitenden dosierten Mengen als auch bezüglich der Anzahl der Kammern (17) programmierbar ist, in denen die dosierten Mengen angeordnet sind.

10. Verfahren nach Anspruch 9, wobei das Programmieren des Schrittes des Anordnens der Art von dosierten Mengen und/oder der Anzahl von Kammern, in denen die dosierten Mengen angeordnet sind, innerhalb einer Zeitspanne variiert.

11. Verfahren nach Anspruch 10, wobei die Zeitspanne der Programmierungsänderung wöchentlich ist.

12. Verfahren nach Anspruch 10, wobei die Zeitspanne der Programmierungsänderung täglich ist.

## Revendications

1. Dispositif de dosage destiné à distribuer des doses prédéterminées de café moulu dans un support de filtre d'une machine à café expresso, comprenant un broyeur (1) de granulés de café torréfié positionné sur une base de support (2), un conduit de sortie (11) de café moulu provenant dudit broyeur, une ouverture de sortie (12) à l'extrémité dudit conduit, une station (14), dans ladite base de support, destinée à positionner le support de filtre (15) dans lequel la dose de café moulu est amenée, un corps (13) muni d'une pluralité de compartiments (17, A, B, C, D, E, F), dans lequel le volume de chaque compartiment est au moins égal à une dose prédéterminée respective de café moulu, chaque compartiment (17) étant muni d'un sommet comportant une ouverture relative (25, a, b, c, d, e, f) et d'un fond, ce dernier étant muni d'éléments (29, 30, 31, 33) destinés à déterminer son ouverture et sa fermeture, **caractérisé en ce que** ledit corps (13) peut être déplacé entre une première position (27) dans laquelle le sommet ouvert (25) de l'un des compartiments (17) est positionné au niveau de ladite ouverture (12) du conduit de sortie (11) de café moulu et une seconde position (14) dans laquelle le fond de l'un des compartiments (17) est positionné au-dessus de ladite station (14) du support de filtre (15), ce qui permet de fournir des moyens de moteur (20, 21, 22) pour effectuer les déplacements dudit corps (13) muni des compartiments (17), de moyens de moteur (36 38, 39) pour actionner lesdits éléments (29, 30, 31, 33) pour ouvrir et fermer le fond du compartiment lorsque le compartiment est au-dessus de la station (14) du support de filtre.

2. Dispositif selon la revendication 1, **caractérisé en ce que** ladite pluralité de compartiments (17 A B C D E F) sont disposés les uns à côté des autres dans une configuration de carrousel circulaire (13), peuvent être déplacés en angle dans les deux directions autour d'un axe de rotation central (18) autour duquel sont disposés lesdits compartiments.

3. Dispositif selon les revendications 1 et 2, **caractérisé en ce que** les compartiments (17, A, B, C, D, E, F) dudit corps de carrousel (13) sont tous dotés d'un volume égal au moins égal à celui de la dose maximale prédéterminée que chaque compartiment doit contenir.

4. Dispositif selon l'une quelconque des revendications 1 à 3, **caractérisé en ce que** la section de chaque compartiment (17, A, B, C, D, E, F) dudit corps de carrousel (13), transversale à l'axe longitudinal s'étendant entre le sommet et le fond, est circulaire.

5. Dispositif selon l'une quelconque des revendications 1 à 4, **caractérisé en ce que** lesdits compartiments ont une forme de récipients cylindriques (41, A, B, C, D, E, F) disposés parallèlement à l'axe de rotation central dudit corps, supportés entre deux éléments en forme de plaque (23, 24) espacés axialement et fixés à un arbre de rotation (18), les extrémités dudit arbre étant montées sur des supports respectifs, une extrémité dudit arbre étant reliée auxdits moyens de moteur (20, 21, 22) conçus pour effectuer les déplacements angulaires du corps (13).

6. Dispositif selon l'une quelconque des revendications 1 à 5, **caractérisé en ce que** lesdits éléments de détermination d'ouverture et de fermeture du fond du compartiment, lorsque celui-ci est situé dans une position au-dessus de la position du support de filtre, comprennent une plaque circulaire (29, A B C D E F) munie d'une broche (31 A B C D E F), à travers laquelle elle peut se déplacer en angle entre une position dans laquelle elle repose contre le bord du fond du compartiment, le maintenant fermé, et une position dans laquelle elle est espacée dudit bord, avec l'ouverture en découlant du fond du compartiment, ladite broche (31) étant montée rotative sur un support (32) porté par l'un (23) des éléments en forme de plaque (23, 24) pour supporter les éléments cylindriques (41) formant les compartiments (17), ladite plaque étant munie d'un appendice (30) qui s'étend radialement à partir de son contour, ledit appendice (30) étant conçu pour interférer avec un poussoir (36) qui, par contraste avec des moyens élastiques (33) qui maintiennent ladite plaque (29) dans la position fermée contre le bord du fond du compartiment (17), en appuyant sur ledit appendice (30), détermine le déplacement angulaire de la plaque (29) autour de ladite broche (31), la déplaçant à distance du bord du fond du compartiment (17).

7. Dispositif selon l'une quelconque des revendications 1 à 6, **caractérisé en ce que** le poussoir (36) est actionné par lesdits moyens de moteur (36, 38, 39) pour actionner lesdits éléments d'ouverture et de fermeture du fond du compartiment (17) lorsque le compartiment (17) est situé dans une position au-dessus de la station (14) du support de filtre.

8. Procédé de distribution d'une dose prédéterminée de café moulu dans le support de filtre (15) d'une machine à café expresso, ladite dose étant la dose relative à la formation d'une certaine boisson, comprenant les étapes suivantes :
- la fourniture d'une pluralité de doses de café moulu, différentes les unes des autres, conçues pour la préparation de différents types respectifs de boissons, à l'intérieur des compartiments de conservation respectifs (17, A, B, C, D, E, F), ceux-ci pouvant être déplacés mutuellement entre une position de charge (27) de la dose relative de café moulu et une position de sortie (14) de ladite dose dans un support de filtre sous-jacent ;
- la sélection de la dose relative au type de boisson requis ;
- la sélection du compartiment associé qui la contient ;
- le déplacement du compartiment contenant la dose sélectionnée de la position tenue au moment de la sélection vers la station (14) du support de filtre ;
- la distribution de la dose sélectionnée dans le support de filtre au moyen de sa sortie du compartiment qui la contient.

9. Procédé selon la revendication 8, **caractérisé en ce que** ladite étape de fourniture d'une pluralité de doses de café moulu à l'intérieur des compartiments de conservation respectifs est programmable, par le biais de ladite unité de commande électronique (ECU), à la fois relativement au type de doses à préparer et relativement au nombre de compartiments (17) à l'intérieur desquels les doses sont disposées.

10. Procédé selon la revendication 9, dans lequel ladite programmation de l'étape de disposition du type de doses et/ou du nombre de compartiments dans lesquels les doses sont disposées varie au cours d'une période temporelle.

11. Procédé selon la revendication 10, dans lequel ladite période temporelle de changement de programmation est hebdomadaire

12. Procédé selon la revendication 10, dans lequel ladite période temporelle de changement de programmation est quotidienne.
